# EUROPÄISCHE PATENTSCHRIFT

(11) **EP 1 432 717 B1**
(45) Veröffentlichungstag und Bekanntmachung des Hinweises auf die Patenterteilung: **01.03.2006**
(21) Anmeldenummer: 00991050.6
(22) Anmeldetag: 15.11.2000
(51) Int. Cl.: C07F 7/08

(54) **SUBSTITUIERTE DISILOXANE, VERFAHREN ZU IHRER HERSTELLUNG UND IHRE VERWENDUNG ZUR UMKEHRUNG DER MULTIDRUGRESISTENZ (Mdr)**
SUBSTITUTED DISILOXANES, METHOD FOR THE PRODUCTION THEREOF AND THE USE THEREOF FOR REVERSAL OF MULTIDRUG RESISTANCE (MDR)
DISILOXANES SUBSTITUES, LEUR PROCEDE DE PREPARATION ET LEUR UTILISATION POUR INVERSER LA RESISTANCE PLEIOTROPE

(43) Veröffentlichungstag der Anmeldung: 30.06.2004
(73) Patentinhaber: Molnar, Jozsef, 6724 Szeged (HU)
(72) Erfinder: VARGA, Andras, 10437 Berlin (DE); HEGYES, Pèter, H-6726 Szeged (HU); MOLNAR, Jòzsef, H-6724 Szeged (HU); MUCSI, Ilona, H-6726 Szeged (HU); HEVER, Anikò, H-6720 Szeged (HU); SZABO, Diana, H-4024 Debrecen (HU); KIESSIG, Stephan, 69168 Wiesloch (DE); LAGE, Hermann, 13353 Berlin (DE); GAAL, Dezsö, H-1024 Budapest (HU); NACSA, Jànos, H-6720 Szeged (HU)
(74) Vertreter: Wehlan, Helmut
(86) Internationale Anmeldenummer: PCT/DE2000/004110
(87) Internationale Veröffentlichungsnummer: WO 2002/040490

(56) Entgegenhaltungen:
- TACKE, REINHOLD ET AL: "Sila drugs. XIX. Silapridinol and pridinol: preparation and properties as well as structures in the crystalline state and in solution" CHEM. BER. (1980), 113(5), 1962-80 , XP000995775
- DATABASE CAOLD [Online] CHEMICAL ABSTRACTS SERVICE, COLUMBUS, OHIO, US; 1909 LUFF B. D. W.: "Organic Derivatives of Silicon (VII). The Synthesis of dl-Sulphobenzylethylisobutylsilicyl Oxide" retrieved from STN Database accession no. 888A XP002165826 & J. CHEM. SOC., Bd. 93, Seiten 2004-2016,
- LIU, SHENG-LIEH ET AL: "Organochlorosilanes and their hydrolysis products" J. CHIN. CHEM. SOC. (TAIPEI) (1971), 18(1-2), 51-5 , XP000995393
- DATABASE CHEMABS [Online] CHEMICAL ABSTRACTS SERVICE, COLUMBUS, OHIO, US; OSADCHEV, A. YU. ET AL: "Synthesis and properties of silbenzylidene thermotropic liquid-crystalline polyesters" retrieved from STN Database accession no. 131:272281 XP002165827 & VYSOKOMOL. SOEDIN., SER. A SER. B (1999), 41(3), 417-422 ,
- DATABASE CHEMABS [Online] CHEMICAL ABSTRACTS SERVICE, COLUMBUS, OHIO, US; SKOROKHODOV, S. S. ET AL: "Silicon-containing polyesters based on organosilicon dicarboxylic acids and aromatic diols" retrieved from STN Database accession no. 119:139893 XP002165828 & VYSOKOMOL. SOEDIN., SER. A (1993), 35(3), 237-41 ,
- DATABASE CHEMABS [Online] CHEMICAL ABSTRACTS SERVICE, COLUMBUS, OHIO, US; KRUPTSOV, B. K. ET AL: "Use of higher alkyl- and alkyl(aryl)-substituted monochlorosilanes in the synthesis of polymers" retrieved from STN Database accession no. 101:57380 XP002165829 & DEPOSITED DOC. (1982), SPSTL 1026 KHP-D82, 11 PP. AVAIL.: SPSTL,
- DATABASE CHEMABS [Online] CHEMICAL ABSTRACTS SERVICE, COLUMBUS, OHIO, US; GLUSHKOVA, N. E. ET AL: "Reaction of aromatic aldehydes with trialkylsilanes, triarylsilanes, dialkylmonoarylsilanes, and diarylmonoalkylsilanes" retrieved from STN Database accession no. 72:31909 XP002165830 & KHIM. PRAKT. PRIMEN. KREMNIIORG. SOEDIN., TR. SOVESCH. (1968), MEETING DATE 1966, 33-41. EDITOR(S): ANDREEV, D. N. PUBLISHER: IZD. "KHIMIYA" LENINGRAD. OTD., LENINGRAD, USSR. ,
- DATABASE CHEMABS [Online] CHEMICAL ABSTRACTS SERVICE, COLUMBUS, OHIO, US; SVETKIN, YU. V. ET AL: "Organosilicon pyridinium methylides. I. Reaction of chloromethylorganyl disiloxanes with pyridines. Ylide formation" retrieved from STN Database accession no. 98:107380 XP002165831 & DEPOSITED DOC. (1981), SPSTL 488 KHP-D81, 11 PP. AVAIL.: SPSTL,
- CHEMICAL ABSTRACTS, vol. 120, no. 16, 18. April 1994 (1994-04-18) Columbus, Ohio, US; abstract no. 193541, OKUNOYAMA, TERU ET AL: "Heat- and moisture-resistant thermosetting resin compositions for semiconductor sealants" XP002165825 & JP 04 366126 A (TOSHIBA CHEMICAL CORP., JAPAN) 18. Dezember 1992 (1992-12-18)
- WROBEL, DIETER ET AL: "Some methoxysilanes, disiloxanes and digermoxanes with olfactory action. Sila-substituted perfumes. 3" MONATSH. CHEM. (1982), 113(4), 381-8 , XP000995383

## Beschreibung

Die Erfindung betriffi neue substituierte Disiloxane der allgemeinen Formel I, Verfahren zu ihrer Herstellung und ihre Verwendung als Verbindungen, die die Effluxpumpenaktivität der multidrugresistenten (gp-170-positiven) Tumorzellen inhibieren und dadurch die Wirksamkeit von Zytostatika wesentlich verbessern.

Maligne Tumorerkrankungen stehen an dritter Stelle der Todesursachen weltweit. Ungefähr 40% aller Krebspatienten können chirurgisch behandelt werden, jedoch muss der größte Teil der Patienten chemotherapeutisch nachbehandelt werden. Die Wirkung der zytostatischen Therapie wird durch das Auftreten von Resistenzen gegenüber Zytostatika insbesondere wegen der Multidrugresistenz (Mdr) stark beeinträchtigt. Im Laufe der Behandlung werden die Zytostatika immer unwirksamer und die toxischen Nebenwirkungen immer stärker, da - in den meisten Fällen - eine ATP-abhängige Effluxpmnpe die Zytostatika aus dem intrazellulären Raum in den extrazellulären Raum transportiert. Der starke Abfall der intrazellurären Zytostatikakonzentration während der Behandlung ermöglicht das Überleben und die Metastasierung der malignen Tumorzellen.
Mdr wird durch die erhöhte Expression von 170 kD Mdr-1 P-glykoprotein (Pgp) verursacht (Endicott et al., Ann. Rev. Bioch. 58; 137-171, 1989). Diese Mdr-1 Gen Überexpression als Schutzmechanismus ist bei resistenten Krebszellen, bei Parasiten, wie z.B. T.gondü oder Plasmodium, aber auch bei Fungi nachweisbar. Unter den anderen Resistenzphänomenen ist die Mdr die häufigste. Die Überbrückung der Multidrugresistenz ist also äußerst wichtig, da zahlreiche Krebserkrankungen und Infektionskrankheiten auf diese Weise erfolgreich behandelt werden können. Es gibt heute nur wenige und teilweise ungenügend wirksame Medikamente, mit denen dieses Ziel zu erreichen ist.
Einige organische Siliciumverbindungen sind als biologisch aktive Substanzen bekannt. So werden z.B. in dem Europa-Patent (EP) 291781 einige Aminoalkylsilan-Verbindungen beschrieben, die als Anti-Parkinsonmittel wirken.

Tacke et al. (Chem. Ber. 113, pp. 162ff. (1980)) beschreiben Siliciumverbindungen und ihre Verwendung als Antiparkinsonmittel. Als Nebenprodukt ohne medizinische Verwendung wurde ein Disiloxan der folgenden Formel isoliert:

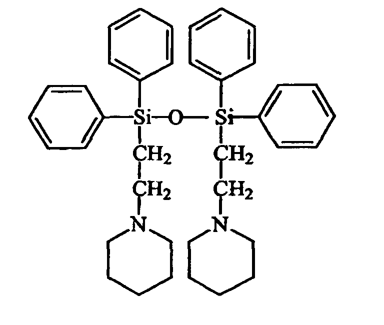

Der Erfindung liegt die Aufgabe zugrunde, Verbindungen zur Verfügung zu stellen, mit denen sich die Wirksamkeit von Zytostatika verbessern lässt. Die Aufgabe wurde erfindungsgemäß durch die Bereitstellung von neuen organischen Siliciumverbindungen der Formel I gelöst.
Die erfindungsgemäßen neuen substituierten Disiloxane der allgemeinen Formel I 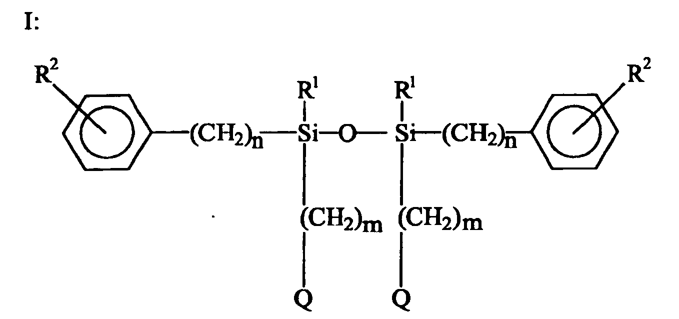
enthalten folgenden Substituenten:
R¹ = Methyl, Ethyl, Phenyl oder tertiär Butyl
R² = X (Halogen: Cl, Br, F), CX₃, (para, ortho, meta),
n = 0-1, m = 1-3
Q = Alkyl, Cycloalkyl, sekundäres Amin, Morpholin, substituiertes Piperazin, worin 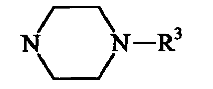
R³ = Methyl, Ethyl, Butyl, Phenyl, Benzyl, -(CH₂)ₚSi(R⁴)₃ mit p = 1 - 3 und R⁴ = Methyl, Ethyl bedeuten.

Die erfindungsgemäß bereitgestellten Verbindungen werden durch Umsetzung von substituierten Alkyl-dichlor-silanen mit Aryl-Grignard-Verbindungen gewonnen und daraus durch acide Hydrolyse Disiloxane, die ihrerseits im Fall von Halogen-Alkylen mit Aminen umgesetzt werden.
In speziellen Fällen wird Magnesium mit 4-Fluor-brombenzol umgesetzt und daraus durch Reaktion mit 3-Chlorpropyl-methyl-dichlorsilan das Zwischenprodukt 1,3-bis(4-fluorophenyl)-1,3-dimethyl-1,3-bis(3-chloropropyl)-disiloxan gewonnen. Dieses Produkt wird seinerseits mit Morpholin zu ALIS 409 oder mit 4-Butyl-piperazin zu ALIS 421 (Beispiele 2 und 3) umgesetzt.
Überraschendweise hat sich herausgestellt, dass es sich bei den erfindungsgemäßen neuen substituierten Disiloxane um biologisch wirksame, nicht toxische Verbindungen handelt, die zur Umkehrung der Multidrogeresistenz (Mdr) der malignen Tumorzellen und pathogenen Erreger fähig sind und die Effluxpumpenaktivität der malignen Mdr-Tumorzellen und die Pgp-Resistenz von parasitären Zellen, Pilzen sowie von Bakterien bereits im ng/ml-Konzentrationsbereich stark inhibieren.
Die neuen substituierten Disiloxane finden Verwendung als Zytostatika und in der Chemotherapie - auch in Kombination mit anderen Mitteln.
Es ist überraschend, dass sie eine starke Chemosensitation der resistenten Mdr-Tumorzellen verursachen und ihre Effluxpumpenaktivität unterdrücken. Dadurch lässt sich die intrazelluläre Chemotherapeutikum-Konzentration so hoch ansetzen, dass kein Unterschied mehr im Vergleich mit parentalen Zellen nachgewiesen werden kann.
Die als ALIS-Verbindungen bezeichneten erfindungsgemäßen Substanzen sind dadurch gekennzeichnet, dass sie biologisch wirksam sind und die Effluxpumpenaktivität der malignen Mdr-Tumorzellen, Pgp-Resistenz von parasitären Zellen, Pilzen und Bakterien bereits im ng/ml-Konzentrationsbereich stark inhibieren. Auch in höheren Konzentration wirken sie in vivo nicht toxisch. Nach dem Zell-Substanz-Kontakt sind sie sofort wirksam. Die ALIS-Verbindungen sind dadurch gekennzeichnet, dass sie hauptsächlich die Wirksamkeit der Chemotherapie erhöhen, aber auch allein zytostatisch wirken.
Die Toxizität der neuen Verbindungen wurde im Maussytem getestet. Das Ergebnis war überraschend gut. Trotz zehnfacher Überdosierung konnte der ID-50 Wert nicht ermittelt werden, da die Mäuse die Behandlung 100%-ig überlebt haben und kein Gewichtsverlust auftrat. In manchen Fällen bekamen die Mäuse scheinbar sogar mehr Appetit. Alle Ergebnisse weisen darauf hin, dass die erfindungsgemäß bereitgestellten Verbindungen zum Einsatz in der Chemotherapie von Tumoren bzw. von Infektionskrankheiten geeignet sind.
Die Morpholino- und die Piperazinyl-Verbindungen werden in Form ihrer physiologisch verträglichen Salze eingesetzt, die sich durch Neutralisation mit geeigneten anorganischen oder organischen Säuren herstellen lassen, z.B. mit Salzsäure, Schwefel- oder Phosphorsäure, Ameisen-, Essig-, Propion-, Glykol-, Milch-, Brenztrauben-, Malein-, Furmar-, Anthranyl-, Naphthalinsulfon-, Sulfanyl- oder Zimtsäure.

Die Erfindung soll anhand von Ausführungsbeispielen näher erläutert werden, ohne auf diese Beispiele beschränkt zu sein.

### Ausführungsbeispiele

### Beispiel 1

### Herstellung von 1,3-bis(4-fluorophenyl)-1,3-dimethyl-1,3-bis(3-chloropropyl)-disiloxan

2,67 g (0,11g-Atom) Mg werden in einer N₂-Atmosphäre bei 120° C für 30 min aktiviert und mit je 50ml getrocknetem Toluol und absolutem Ether bedeckt.
In diese Lösung werden langsam unter Magnetrührung 17,5 g (0,1 mol) 4-Fluor-brombenzol, gelöst in 100 ml absolutem Ether, getropft.
Dieses Gemisch wird bei 40° C 2 Stunden gerührt, von dem übrig gebliebenen Mg dekantiert, in einen Tropftrichter gegeben und langsam unter Eiskühlung zu 19,1 g (0,1 mol) 3-Chlorpropyl-methyl-dichlorsilan, das zuvor in 100 ml absolutem Ether aufgelöst wurde, getropft. Es bildet sich ein weißer Niederschlag. Nach dem Zutropfen wird die Reaktion für 1 Stunde bei Zimmertemperatur fortgesetzt. Danach wird unter Rückflussbedingungen erwärmt, nach dem Abkühlen das Lösungsmittel in einer N₂-Atmosphäre verdampft und der Rest über eine kurze Vigreux-Kolonne destilliert.
46,8 g (0,15 mol) dieser Verbindung werden langsam unter intensivem Rühren und unter Eiskühlung zu einem Gemisch aus 100 g Eis und 20 ml konz. Salzsäure getropft. Danach wird 2 Stunden intensiv gerührt, dann 2 x mit je 100 ml Ether extrahiert und die organische Phase über CaCl₂· sicc getrocknet.
Das Lösungsmittel wird abdestilliert und das verbleibende Siloxan-Produkt ohne weitere Reinigung als Ausgangsstoff für die Herstellung von ALIS-409 und ALIS-421 verwendet.

### Beispiel 2

Herstellung von 1,3-Dimethyl-1,3-bis(4-fluorophenyl)-1,3-bis(3-morpholino-propyl)-disiloxan-dihydrochlorid (ALIS 409)
22,37 g (0,05 mol) des nach Beispiel 1 hergestellten Siloxan-Produktes werden in einem Gemisch aus 150 ml getrocknetem Toluol und 20 ml absolutem Alkohol aufgelöst.
Zu dieser Lösung werden 0,21 mol Morpholin getropft, das zuvor in 80 ml Toluol aufgelöst wurde. Das Gemisch wird für 55 Stunden unter Rückflussbedingungen erwärmt. Dann werden die gebildeten Kristalle gefiltert und mit wenig Toluol nachgewaschen. Das Lösungsmittel wird im Vakuum entfernt.
Das verbleibende viskose Öl wird in Aceton aufgelöst und mit einer Ethanol/HCl-Lösung auf pH = 2,0 eingestellt. Die ausgeschiedenen Kristalle werden gefiltert und mit wenig Aceton nachgewaschen.

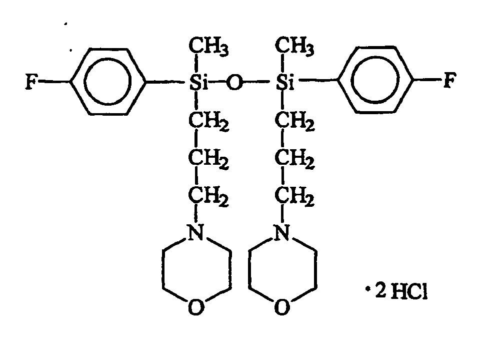

### Beispiel 3

### Herstellung von 1,3-Dimethyl-1,3-bis(4-fluorophenyl)-1,3-bis{3-[1(4-butyl-piperazinyl)]-propyl}-disiloxan-tetrahydrochlorid (ALIS 421)

Es wird wie unter Beispiel 2 verfahren, nur dass anstelle des Morpholins hier 4-Butyl-piperazin eingesetzt wird.

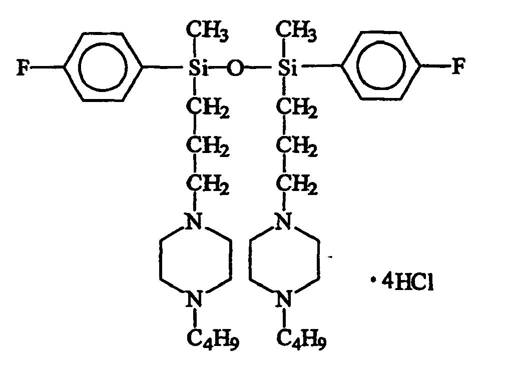

### Beispiel 4

### Wirksamkeit von ALIS-409 (sehr gut wasserlöslich)

0,5 ml 2x10⁶ /ml L-5178Y parental und Mdr Mauslymphomazellen wurden 10 Min. lang mit 40,0 200,0 und 1000 ng ALIS-409 inkubiert. Danach wurden die Zellen mit Rhodamin-123 Indikatorfarbstoff (Endkonzentration: 5,2 µMol) bei 37C° für 20 Min. inkubiert. Die Zellen wurden mit PBS gewaschen und die Fluoreszenz-Intensität (FL1) mittels Cellsorter gemessen. Die Intensität der unbehandelten parentalen Zellen entsprach der 100%igen Hemmung.

Die Intensität der unbehandelten Mdr-Zellen entsprach der 100%-igen Effluxpumpemktivität. Bei mehrfach wiederholten unabhängigen Versuchen in Deutschland und in Ungam wurde eine Inhibition der Effluxpumpen bereits bei 40,0 ng/ml Konzentration zwischen 20-45% gefunden und bei etwa 200,0 ng/ml Konzentration eine 80%-ige Hemmung erreicht. Der 100%-ige Hemmungsbereich liegt etwa zwischen 300-800 ng/ml. Es gab zwar eine erhebliche Schwankung bei der Wiederholung, jedoch fiel immer die 100%-ige Hemmung in den Nanogramm Bereich.
Bei der Überprüfung von Mdr-Gen-Expression mittels PCR wurde kein Einfluss dieser ALIS-Verbindung auf die Reduktion oder Verstärkung der Mdr RNA Synthese gefunden. Das ist deshalb günstig, weil die Mdr auch eine wichtige physiologische Rolle bei den Entgiflungsmechanismen der gesunden Zellen (z.B. Nierenzellen) spielt und nach der Beendigung der Therapie das aktive gp-170 Protein wieder produziert werden kann. Außerdem wirkt ALIS-409 auch allein cancerostatisch - und zwar gegenüber gp-170 positiv (EPG85-257RDB) Magencarcinomazellen in vitro. Es wurde die folgende Proliferationshemmung nachgewiesen: 41% bei 100 ng/ml und 74% bei 300 ng/ml.
Die in-vivo Toxizitätsprüfung ergab, dass die Mäuse bei 10,0 mg/kg ALIS-409 Langzeitbelastung 100%-ig und ohne Gewichtsverlust die Therapie überlebten.

### Beispiel 5

### Wirksamkeit von ALIS-421 (sehr gut wasserlöslich)

Die methodische Überprüfung war mit dem Beispiel 3 identisch.
Auch die Inhibition der Effluxpumpenaktivitäten waren ähnlich groß.
Im Konzentrationsbereich 200-500 ng/ml konnte eine 100%-ige Inhibition erreicht werden.
Die PCR-Untersuchung ergab, dass diese Substanz keinen Einfluss auf die Genexpression hat.
Die schnelle Hemmung nach einer 10-minütigen Inkubatioszeit weist auf eine direkte Interaktion zwischen der Substanz und dem gp-170 Protein hin.
Ein cancerostatischer Effekt allein war schwächer als bei ALIS 409.
Bei der Toxizitätsprüfung war das ALIS-421 bei 10,0 mg/kg Konzentration nicht toxisch, und das 100%-ige Überleben der Mäuse ohne Gewichtsverlust spricht für die potentielle Anwendbarkeit dieser Substanz.

## Patentansprüche

1. Substituierte Disiloxane der allgemeinen Formel I 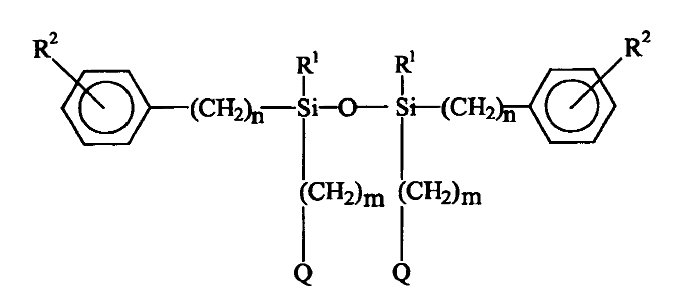
mit folgenden Substituenten:
R¹ = Methyl, Ethyl, Phenyl oder tertiär Butyl
R² = X (Halogen: Cl, Br, F), CX₃, (para, ortho, meta),
n = 0-1, m = 1-3
Q = Alkyl, Cycloalkyl, sekundäres Amin, Morpholin, substituiertes Piperazin.

2. Neue substituierte Disiloxane nach Anspruch 1, **dadurch gekennzeichnet, dass** Q = 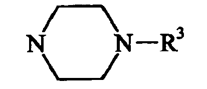
ist (R³ = Methyl, Ethyl, Butyl, Phenyl, Benzyl, -(CH₂)ₚSi(R⁴)₃ mit p = 1 - 3 und R⁴ = Methyl, Ethyl).

3. 1,3-Dimethyl-1,3-bis(4-fluorophenyl)-1,3-bis(3-morpholino-propyl)-disiloxan-dihydrochlorid und seine physiologisch verträglichen Salze.

4. 1,3-Dimethyl-1,3-bis(4-fluorophenyl)-1,3-bis(3-morpholino-propyl)-disiloxan-dihydrochlorid.

5. 1,3-Dimethyl-1,3-bis(4-fluorophenyl)-1,3-bis{3-[1(4-butyl-piperazinyl)]-propyl}-disiloxan und seine physiologisch verträglichen Salze.

6. 1,3-Dimethyl-1,3-bis(4-fluorophenyl)-1,3-bis{3-[1(4-butyl-piperazinyl)]-propyl}-disiloxantetrahydrochlorid.

7. Verfahren zur Herstellung der substituierten Disiloxane nach Anspruch 1 und 2, **dadurch gekennzeichnet, dass** substituierte Alkyl-dichlor-silane mit Aryl-Grignard-Verbindungen umgesetzt und daraus durch acide Hydrolyse Disiloxane entstehen, die ihrerseits im Fall von Halogen-Alkylen mit Aminen umgesetzt werden.

8. Verfahren zur Herstellung der Disiloxane nach Anspruch 3 bis 6, **dadurch gekennzeichnet, dass** Magnesium mit 4-Fluor-brombenzol umgesetzt wird, daraus durch Reaktion mit 3-Chlorpropyl-methyl-dichlorsilan das Zwischenprodukt 1,3-bis(4-fluorophenyl)-1,3-dimethyl-1,3-bis(3-chloropropyl)-disiloxan entsteht, das mit
8.1. Morpholin
8.2. N-Butyl-piperazin
umgesetzt wird.

9. Substituierte Disiloxane nach Anspruch 1 bis 6 zur Verwendung als biologisch wirksame, praktisch nicht toxische Verbindungen zur Tumorbehandlung oder zur Umkehr der Multidrugresistenz (Mdr) maligner Tumorzellen.

10. Verbindungen nach Anspruch 9 zur Verwendung als Zytostatika, zur Erhöhung der Wirksamkeit der Chemotherapie sowie zur Inhibition der Effluxpumpenaktivität maligner Mdr-Tumorzellen, pathogener Erreger oder der Pgp-Resistenz von parasitären Zellen, Pilzen und Bakterien.

## Claims

1. Substituted disiloxanes of the general structure I 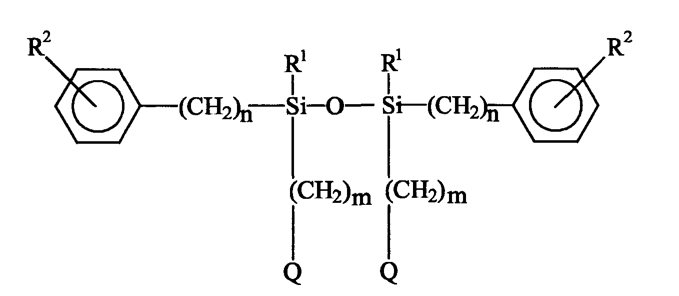
with the following substituents:
R¹ = methyl, ethyl, phenyl or tertiary butyl
R² = X (halogen: Cl, Br, F), CX₃, (para, ortho, meta),
n = 0-1, m = 1-3
Q = alkyl, cycloalkyl, secondary amine, morpholine, substituted piperazine.

2. New substituted disiloxanes as described in claim 1, **characterised in that** Q = 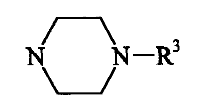
is (R³ = methyl, ethyl, butyl, phenyl, benzyl, -(CH₂)ₚSi(R⁴)₃ with p = 1 - 3 and R⁴ = methyl, ethyl).

3. 1,3-Dimethyl-1,3-bis(4-fluorophenyl)-1,3-bis(3-morpholinopropyl)disiloxane dihydrochloride and its physiologically compatible salts.

4. 1,3-Dimethyl-1,3-bis(4-fluorophenyl)-1,3-bis(3-morpholinopropyl)disiloxane dihydrochloride.

5. 1,3-Dimethyl-1,3-bis(4-fluorophenyl)-1,3-bis{3-[1(4-butylpiperazinyl)]propyl}disiloxane and its physiological compatible salts.

6. 1,3-Dimethyl-1,3-bis(4-fluorophenyl)-1,3-bis{3-[1(4-butylpiperazinyl)]propyl}disiloxane tetrahydrochloride.

7. Method for the preparation of substituted disiloxanes as described in claim 1 and 2 **characterised in that** substituted alkyldichlorosilanes are reacted with aryl Grignard compounds from which disiloxanes are formed by acid hydrolysis that in the case of haloalkylene are in turn reacted with amines.

8. Method for the preparation of disiloxanes as described in claim 3 to 6 **characterised in that** magnesium is reacted with 4-fluorobromobenzene from which by reaction with 3-chloropropylmethyldichlorosilane the intermediate 1,3-bis(4-fluorophenyl)-1,3-dimethyl-1,3-bis(3-chloropropyl)disiloxane is formed which is reacted with
8.1. morpholine
8.2. N-butylpiperazine.

9. Substituted disiloxanes as described in claim 1 to 6 for use as biologically active, essentially non-toxic compounds for tumour treatment or for the reversal of multidrug resistant (MDR) malignant tumour cells.

10. Compounds as described in claim 9 for use as cytostatics, to increase the effectiveness of chemotherapy as well as for the inhibition of efflux pump activity of malignant MDR tumour cells, pathogenic organisms or Pgp resistance of parasitic cells, fungi and bacteria.

## Revendications

1. Disiloxanes substitués de structure générale I 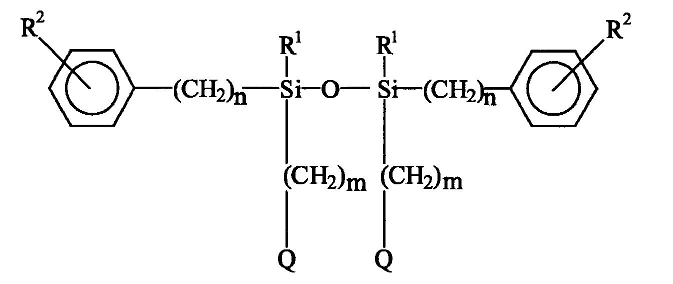
avec les substituants suivants :
R¹ = méthyle, éthyle, phényle ou tert-butyle
R² = X (halogène : Cl, Br, F), CX₃, (para, ortho, méta),
n = 0 à 1, m = 1 à 3
Q = alkyle, cycloalkyle, amine secondaire, morpholine, pipérazine substituée.

2. Nouveaux disiloxanes substitués selon la revendication 1, **caractérisés en ce que** Q = 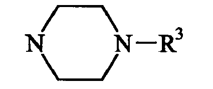
(R³ = méthyle, éthyle, butyle, phényle, benzyle, -(CH₃)ₚSi(R⁴)₃ avec p = 1 à 3 et R⁴ = méthyle, éthyle).

3. Dichlorhydrate de 1,3-diméthyl-1,3-bis(4-fluorophényl)-1,3-bis(3-morpholinopropyl)disiloxane et ses sels physiologiquement compatibles.

4. Dichlorhydrate de 1,3-diméthyl-1,3-bis(4-fluorophényl)-1,3-bis(3-morpholinopropyl)disiloxane.

5. 1,3-Diméthyl-1,3-bis(4-fluorophényl)-1,3-bis{3-[1(4-butylpipérazmyl)]propyl}disiloxane et ses sels physiologiquement compatibles.

6. Tétrachlorhydrate de 1,3-diméthyl-1,3-bis(4-fluorophényl)-1,3-bis{3-[1(4-butylpipérazinyl)]propyl}disiloxane.

7. Procédé pour la préparation de disiloxanes substitués selon les revendications 1 et 2, **caractérisé en ce que** des alkyldichlorosilanes substitués sont mis à réagir avec des composés de Grignard aryle à partir desquels sont formés les disiloxanes par hydrolyse acide, lesquels dans le cas d'un halogénoalkylène sont à leur tour mis à réagir avec des amines.

8. Procédé pour la préparation de disiloxanes selon les revendications 3 à 6, **caractérisé en ce que** du magnésium est mis à réagir avec le 4-fluorobromobenzène à partir duquel, par réaction avec le 3-chloropropylméthyldichlorosilane, l'intermédiaire 1,3-bis(4-fluorophényl)-1,3-diméthyl-1,3-bis(3-chloropropyl)disiloxane est formé, lequel est mis à réagir avec
8.1 la morpholine
8.2 la N-butylpipérazine.

9. Disiloxanes substitués selon les revendications 1 à 6 pour une utilisation comme composés biologiquement actifs, essentiellement non toxiques, pour le traitement d'une tumeur ou pour l'inversion de cellules tumorales malignes multi-résistantes aux médicaments (MDR).

10. Composés selon la revendication 9 pour une utilisation comme cytostatiques, pour augmenter l'efficacité d'une chimiothérapie ainsi que pour l'inhibition de l'activité de pompe d'efflux de cellules tumorales MDR malignes, d'organismes pathogènes ou de la résistance au Pgp de cellules parasites, de champignons et de bactéries.
